# EUROPÄISCHE PATENTSCHRIFT

(11) **EP 1 916 479 B1**
(45) Veröffentlichungstag und Bekanntmachung des Hinweises auf die Patenterteilung: **28.01.2015**
(21) Anmeldenummer: 07018129.2
(22) Anmeldetag: 14.09.2007
(51) Int. Cl.: F23D 3/40, B60H 1/22, F23N 1/02

(54) **Verfahren zum Betreiben eines brennsoffbetriebenen Fahrzeugheizgerätes in einer Startphase**
Method for operating a fuel-driven heating device for a motor vehicle in the start phase
Procédé destiné au fonctionnement d'un appareil de chauffage de véhicule fonctionnant au carburant dans une phase de démarrage

(30) Priorität: 18.10.2006 DE 102006049177
(43) Veröffentlichungstag der Anmeldung: 30.04.2008
(73) Patentinhaber: Eberspächer Climate Control Systems GmbH & Co. KG, 73730 Esslingen (DE)
(72) Erfinder: Eberspach, Günter, 72649 Wolfschlugen (DE)
(74) Vertreter: RLTG

(56) Entgegenhaltungen:
- EP-A- 1 674 794
- DE-C1- 19 605 152
- FR-A- 2 512 928

## Beschreibung

Die vorliegende Erfindung betrifft ein Verfahren zum Betreiben eines brennstoffbetriebenen Fahrzeugheizgerätes in einer Startphase, wobei das Fahrzeugheizgerät eine Brenneranordnung mit einer Brennkammer in einem Brennkammergehäuse, eine Brennstoffzuführanordnung zum Zuführen von Brennstoff zu der Brennkammer, eine Verbrennungsluftzuführanordnug zum Zuführen von Verbrennungsluft zu der Brennkammer, ein elektrisch erregbares Zündorgan zum Zünden eines Verbrennungsluft/Brennstoff-Gemisches im Bereich der Brennkammer sowie eine Ansteuervorrichtung zur Ansteuerung der Brennstoffzuführanordnung, der Verbrennungsluftzuführanordnung und des Zündorgans umfasst.

Beim Starten des Betriebs derartiger Fahrzeugheizgeräte ist es bekannt, eine Heizleistungsregelung für das Zündorgan vorzunehmen, um auf diese Art und Weise sicherzustellen, dass entsprechend der vorgegebenen elektrischen Soll-Leistung ein Energieeintrag stattfindet, der innerhalb einer möglichst kurzen Zeit zu einer ausreichend hohen Temperatur führt, um das im Bereich einer Brennkammer vorhandene zündfähige Gemisch von Verbrennungsluft und Brennstoff zu zünden. Ein Fahrzeugsheizgerät mit derartigen Merkmalen ist aus der DE-19605152-C1 und der FR-2512928 bekannt. Vor allem bei als Standheizungen eingesetzten Fahrzeugheizgeräten besteht dabei das Problem, dass diese in einer Phase zu betreiben bzw. zu starten sind, in welcher im Allgemeinen als einzige Energiequelle die in einem Fahrzeug vorhandene Batterie zur Verfügung steht. Werden in dieser Phase auch noch andere Verbraucher elektrischer Energie aktiviert, wie z. B. ein Gebläse, um im Fahrzeugheizgerät erwärmte Luft in den Fahrzeuginnenraum einzuleiten, oder elektrisch heizbare Fensterscheiben oder dergleichen, so kann es insbesondere bei vergleichsweise niedrigen Außentemperaturen zu einer Überlastung der Spannungsversorgung und einem entsprechenden Abfall der bereitgestell-ten Spannung kommen. Um in einer derartigen Situation die geforderte Soll-Leistung bereitstellen zu können, muss das Tastverhältnis, also der Tastgrad der getaktet an das Zündorgan angelegten Spannung, entsprechend erhöht werden, wobei ein Tastverhältnis von 100%, also eine permanente Erregung, nicht überschritten werden kann. Es kann also grundsätzlich eine Situation auftreten, in welcher die an sich erforderliche bzw. vorgegebene Soll-Leistung des Zündorgans nicht oder nicht permanent erreicht werden kann. In Verbindung mit dem Problem, dass derartige Glühstifte fertigungsbedingt vergleichsweise große Schwankungen im elektrischen Widerstand aufweisen können und dass auch die Umgebungsbedingungen im Bereich der Brennkammer variieren können, kann dies dazu führen, dass trotz elektrischer Erregung des Zündorgans und trotz Bereitstellung eines zündfähigen Gemisches aus Verbrennungsluft und Brennstoff eine Zündung nicht erfolgen wird. Ein weiteres Problem kann auftreten, wenn bei bereits eingeleiteter Verbrennungsluft aufgrund einer teilweise entleerten Brennstoffleitung durch das Betreiben der Brennstoffzuführanordnung nicht bereits von Anbeginn der Startphase Brennstoff bzw. ausreichend Brennstoff bereitgestellt werden kann. Dies kann es erforderlich machen, die Erregung des Zündorgans über eine übermäßig lange Zeit hinweg aufrecht zu erhalten, was eine entsprechende Belastung der Spannungsversorgung mit sich bringt.

Es ist die Aufgabe der vorliegenden Erfindung, ein Verfahren zum Betreiben eines brennstoffbetriebenen Fahrzeugheizgeräts in einer Startphase bereitzustellen, mit welchem die Gefahr der Überlastung der Spannungsversorgung verringert werden kann und auch bei vergleichsweise schwacher Spannungsversorgung die Startsicherheit erhöht werden kann.

Erfindungsgemäß wird diese Aufgabe gelöst durch ein Verfahren zum Betreiben eines brennstoffbetriebenen Fahrzeugheizgerätes in einer Startphase, wobei das Fahrzeugheizgerät eine Brenneranordnung mit einer Brennkammer in einem Brennkammergehäuse, eine Brennstoffzuführanordnung zum Zuführen von Brennstoff zu der Brennkammer, eine Verbrennungsluftzuführanordnug zum Zuführen von Verbrennungsluft zu der Brennkammer, ein elektrisch erregbares Zündorgan zum Zünden eines Verbrennungsluft/Brennstoff-Gemisches im Bereich der Brennkammer sowie eine Ansteuervorrichtung zur Ansteuerung der Brennstoffzuführanordnung, der Verbrennungsluftzuführanordnung und des Zündorgans umfasst, wobei das Verfahren die folgenden Maßnahmen umfasst:
a) Betreiben der Brennstoffzuführanordnung und der Verbrennungsluftzuführanordnung zum Erzeugen eines Verbrennungsluft/Brennstoff-Gemisches im Bereich der Brennkammer,
b) Erregen des Zündorgans durch Anlegen einer getakteten Spannung zum Einstellen einer vorbestimmten Soll-Leistung des Zündorgans,
c) dann, wenn das Tastverhältnis der getakteten Spannung für das Zündorgan eine erste vorbestimmte Grenze erreicht, Verringern der Fördermenge der Verbrennungsluftzuführanordnung.

Wird bei Durchführung des erfindungsgemäßen Verfahrens also erkannt, dass es möglicherweise Probleme im Bereich der Spannungsversorgung gibt, nämlich dadurch, dass das Tastverhältnis sehr stark angehoben werden muss, um die geforderte Soll-Leistung zu erreichen, was bedeutet, dass die von der Spannungsversorgung bereitgestellte Maximalspannung bereits übermäßig stark abgesunken ist, kann durch das Verringern der Fördermenge der Verbrennungsluftzuführanordnung ein besonders vorteilhafter Effekt erreicht werden. Ein geringerer Verbrennungsluftstrom hat nämlich zur Folge, dass der Wärmeabtrag aus dem Bereich des Zündorgans entsprechend verringert wird, so dass auch dann, wenn die an sich geforderte Heizleistung nicht oder nicht permanent aufrecht erhalten werden kann, aufgrund des geringeren Luftvolumenstroms auch weniger Energie aus dem Bereich des Zündorgans wegtransportiert wird. Es entsteht somit ein "Wärmestau" in der Umgebung des Zündorgans, so dass, obgleich möglicherweise die Soll-Heizleistung nicht erreicht werden kann, die in den Bereich der Umgebung des Zündorgans eingetragene und dort auch beibehaltene Wärmeenergie ausreicht, um die zum Zünden erforderliche Temperatur zu erzeugen. Ein weiterer besonders vorteilhafter Effekt liegt darin, dass mit dem Verringern der Fördermenge der Verbrennungsluftzuführanordnung selbstverständlich auch deren Energiebedarf sinkt, so dass aufgrund der Tatsache, dass derartige Verbrennungsluftzuführanordnungen im Allgemeinen auch elektrisch betrieben sind, hier eine Entlastung der Spannungsversorgung erzeugt wird.

Bei einer besonders vorteilhaften Variante kann vorgesehen sein, dass bei Überschreiten der vorbestimmten ersten Grenze die Fördermenge der Verbrennungsluftzuführanordnung in Abhängigkeit von dem Tastverhältnis der getakteten Spannung für das Zündorgan verringert wird. Hier kann also dann, wenn die erste vorbestimmte Grenze erreicht ist, beispielsweise durch Auslesen eines zuvor generierten Kennfeldes in Zuordnung zu dem tatsächlich vorhandenen Tastverhältnis eine entsprechende Fördermenge der Verbrennungsluft vorgegeben werden, so dass beispielsweise mit ansteigendem Tastverhältnis die Fördermenge entsprechend zurückgenommen wird.

Um bei Verringerung der Fördermenge der Verbrennungsluftzuführanordnung gleichwohl ein für die Startphase geeignetes, zündfähiges Gemisch aus Verbrennungsluft und Brennstoff bereitstellen zu können, wird vorgeschlagen, dass in dieser Phase auch die Fördermenge der Brennstoffzuführanordnung verringert wird.

Die erste vorbestimmte Grenze kann bei einem Tastverhältnis von 100% liegen. Dies bedeutet also, dass dann, wenn eine weitere Erhöhung der mittleren bzw. anliegenden Spannung nicht mehr genutzt werden kann, um die elektrische Leistung, also die Heizleistung, des Zündorgans zu erhöhen, eingegriffen wird, um gleichwohl dafür sorgen zu können, dass das in der Brennkammer bereitgestellte Gemisch zur Verbrennung gebracht wird.

Alternativ ist es möglich, dass die erste vorbestimmte Grenze bei einem Tastgrad von weniger als 100% liegt. Dies lässt noch einen bestimmten Sicherheitsbereich, in welchem vor allem in Verbindung mit der angepassten Verringerung der Fördermenge der Verbrennungsluftzuführanordnung versucht wird, durch allmähliches Senken der Fördermenge bei weiterhin ansteigendem Tastverhältnis die Zündbedingungen im Bereich des Zündorgans zu optimieren.

Gemäß der vorliegenden Erfindung kann weiter vorgesehen sein, dass die Brenneranordnung in dem Brennkammergehäuse ein poröses Vedampfermedium zur Aufnahme von flüssigem Brennstoff von der Brennstoffzuführanordnung und diesem zugeordnet eine elektrisch erregbare Heizeinrichtung umfasst, und dass dann, wenn das Tastverhältnis der getakteten Spannung für das Zündorgan eine zweite vorbestimmte Grenze erreicht, die Heizleistung der in der Startphase betriebenen Heizeinrichtung verringert wird.

Dabei kann beispielsweise vorgesehen sein, dass die Heizeinrichtung abgeschaltet wird, um somit eine maximale Entlastung der Spannungsversorgung zu erhalten.

Die erste vorbestimmte Grenze kann beispielsweise der zweiten vorbestimmten Grenze entsprechen.

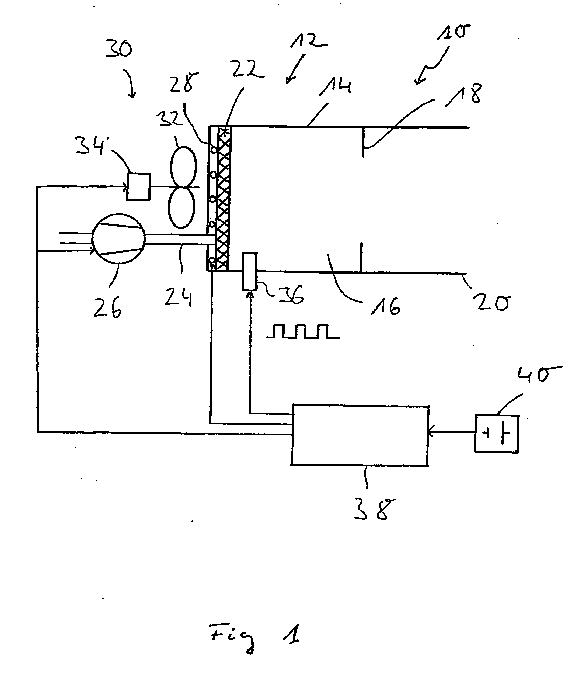

Die vorliegende Erfindung wird nachfolgend mit Bezug auf die beiliegende Fig. 1 detailliert beschrieben, welche eine Prinzipansicht eines Fahrzeugheizgeräts mit seinen verschiedenen Systembereichen zeigt.

Das in der Fig. 1 dargestellte Fahrzeugheizgerät 10, welches beispielsweise als Standheizung oder Zuheizer eingesetzt werden kann, umfasst eine Brenneranordnung 12 mit einem Brennkammergehäuse 14. Das im Wesentlichen topfartig ausgebildete Brennkammergehäuse 14 umschließt eine Brennkammer 16, in welcher im Verbrennungsbetrieb ein Gemisch aus Verbrennungsluft und Brennstoff verbrannt wird. Die Verbrennungsabgase strömen durch eine Flammblende 18 in ein Flammrohr 20, um in einem dann folgenden Wärmetauscherbereich die Wärme auf das zu erwärmende Medium, also beispielsweise Luft oder Wasser, zu übertragen.

In einem Bodenbereich des Brennkammergehäuses 14 ist ein poröses Verdampfermedium 22 vorgesehen. Dieses beispielsweise aus Geflecht, Gewirk, Schaumkeramik oder odergleichen aufgebaute poröse Verdampfermedium 22 nimmt flüssigen Brennstoff von einer Brennstoffzuführleitung 24 auf. Eine Brennstoffzuführanordnung 26, also beispielsweise eine Dosierpumpe, fördert den Brennstoff von einem Brennstoffreservoir über die Leitung 24 in das Brennkammergehäuse 14 bzw. in das poröse Verfampfermedium 22. Im Innenvolumenbereich dieses porösen Verdampfermediums 22 verteilt sich der zunächst noch flüssige Brennstoff durch Kapillarförderwirkung und auch durch Schwerkrafteinwirkung und gelangt auch an die der Brennkammer 16 zugewandte Seite des porösen Verdampfermediums 22. Durch die bei der Verbrennung entstehende Wärme wird der Brennstoff an dieser Oberfläche abdampfen, so dass in der Brennkammer 16 dann der zur Verbrennung erforderliche Brennstoffdampf erzeugt wird. Diese Abdampfung kann insbesondere in der Startphase durch eine elektrisch erregbare Heizeinrichtung 28 noch unterstützt werden.

Eine Verbrennungsluftzuführanordnung 30 umfasst ein Förderrad 32 und einen dieses zur Drehung antreibenden Elektromotor 34. Die Verbrennungsluftzuführanordnung dient dazu, die zur Erzeugung eines verbrennungsfähigen bzw. zündfähigen Gemisches erforderliche Luft in die Brennkammer 16 einzuleiten. Hierzu können im Bereich des Bodens und der Umfangswandung des Brennkammergehäuses 14 Öffnungen vorgesehen sein, über welche die Verbrennungsluft in die Brennkammer 16 gelangen kann.

Ferner umfasst die Brenneranordnung 12 ein elektrisch erregbares Zündorgan 36, wie z. B. einen Glühstift. Dieses Zündorgan 36 wird vor allem in der Startphase erregt, um lokal, also im Bereich von dessen Umgebung, so hohe Temperaturen zu erzeugen, dass das dort auch vorhandene Gemisch aus Verbrennungsluft und Brennstoffdampf gezündet wird und sich dann ausgehend von diesem Bereich die Verbrennung über die gesamte Brennkammer 16 ausbreitet.

Eine Ansteuervorrichtung 38 dient dazu, das Fahrzeugheizgerät 10 unter Berücksichtigung verschiedener Parameter in geeigneter Weise zu betreiben. Dazu ist die Ansteuervorrichtung 38 in Ansteuerverbindung mit der Brennstoffzuführanordnung 26, also der Dosierpumpe, der Verbrennungsluftzuführanordnung 30, also dem Elektromotor 34 derselben, dem Zündorgan 36 und auch der Heizeinrichtung 28. Da all diese unter der Ansteuerung der Ansteuervorrichtung 38 stehenden Systembereiche der Brenneranordnung 10 elektrisch zu betreiben sind, steht die Ansteuervorrichtung 38 weiterhin in Verbindung mit einer Spannungsquelle 40, beispielsweise einer Fahrzeugbatterie bzw. einem Bordspannungssystem eines Fahrzeugs, oder ist dazu in der Lage, eine Verbindung zwischen dieser Spannungsquelle 40 und den verschiedenen elektrisch zu erregenden Systembereichen herzustellen.

Es sei darauf hingewiesen, dass vorangehend der prinzipielle Aufbau eines derartigen Fahrzeugheizgeräts 10 beschrieben worden ist, der selbstverständlich in verschiedensten konstruktiven und funktionalen Aspekten variiert werden kann.

Soll dieses Fahrzeugheizgerät 10 in Betrieb genommen werden, so werden die Brennstoffzuführanordnung 26 und die Verbrennungsluftzuführanordnug 30 durch entsprechende Ansteuersignale der Ansteuervorrichtung 38 in Betrieb gesetzt. Es wird also Verbrennungsluft in die Brennkammer 16 gefördert, und flüssiger Brennstoff wird in das poröse Verdampfermedium 22 eingespeist. Da in einer derartigen Startphase im Allgemeinen sehr niedrige Umgebungstemperaturen vorherrschen und mithin auch die verschiedenen Systembereiche der Brenneranordnung 12 vergleichsweise kalt sein werden, kann auch die Heizeinrichtung 28 erregt werden, um das poröse Verdampfermedium 22 zu erwärmen und somit die Verdampfung in Richtung Brennkammer 16 zu unterstützen.

In der Startphase wird weiterhin dann das Zündorgan 36 erregt, um bei Bereitstellung eines Gemisches aus Brennstoffdampf und Verbrennungsluft in der Brennkammer 16 lokal, nämlich im Bereich der Umgebung dieses Zündorgans 36, so hohe Temperaturen zu erzeugen, dass die Verbrennung dort startet und sich über die Brennkammer 16 hinweg ausbreiten kann. Um diese Erregung des Zündorgans 36 vorzunehmen, wird von Ansteuervorrichtung 38 eine getaktete Spannung mit einem Tastverhältnis angelegt, wobei die anliegende Maximalspannung im Wesentlichen der von der Spannungsquelle 40 bereitgestellten Spannung entspricht. Da im Allgemeinen in dieser Startphase eine Leistungsregelung der elektrischen Leistung bzw. Heizleistung des Zündorgans 36 erfolgt, wird das Tastverhältnis so eingestellt, dass in Verbindung mit dem sich dann ergebenden Stromfluss eine bestimmte Soll-Leistung erreicht wird. Mit dieser Soll-Leistung wird sichergestellt, dass der Energieeintrag in das Zündorgan 36 und mithin die im Bereich des Zündorgans 36 dann bereitgestellte Wärmeenergie ausreicht, um die Zündtemperatur zu erzeugen.

Ist in einer derartigen Startphase die Spannungsquelle 40 beispielsweise auch durch andere Verbraucher belastet oder ist der Ladungszustand der Spannungsquelle 40 vergleichsweise schlecht, so kann es vor allem bei vergleichsweise niedrigen Umgebungstemperaturen dazu kommen, dass die Spannung der Spannungsquelle 40 von einem normalen Wert bei etwa 12V auf Werte von bis zu unter 10V absinkt. Eine geringere zur Verfügung stehende Spannung bedeutet jedoch, dass zum Bereitstellen der Soll-Leistung des Zündorgans 36 das Tastverhältnis des an dieses angelegten gepulsten Spannungssignals erhöht werden muss, also die AN-Intervalle in ihrer Zeitdauer zunehmen und entsprechend die AUS-Signale in ihrer Zeitdauer abnehmen bei konstanter Tastfrequenz. Bei zu starkem Spannungsabfall der Spannungsquelle 40 besteht die Gefahr, dass auch bei weiterer Erhöhung des Tastverhältnisses die geforderte Heizleistung nicht mehr bereitgestellt werden kann. Vor allem in Verbindung damit, dass die Verbrennungsluftzuführanordnung 30 betrieben wird, um ausreichend Verbrennungsluft in die Brennkammer 16 zu fördern, kann das Problem auftreten, dass durch den vorhandenen Luftstrom bei noch nicht einsetzender Verbrennung ein erheblicher Teil der durch das Zündorgan 36 bereitgestellten Wärmeenergie abtransportiert wird und somit Zündbedingungen nicht bereitgestellt werden. Dieses Problem kann dann noch gesteigert werden, wenn beispielsweise die Brennstoffzuführleitung 24 nicht vollständig mit Brennstoff gefüllt ist und somit zusätzlich Zeit erforderlich ist, um Brennstoff in das poröse Verfdampfermedium 22 einzuspeisen und diesen dann darin zu verteilen und in Richtung Brennkammer 16 abzudampfen.

Tritt also bei einem Fahrzeugheizgerät 10 eine derartige Situation auf, dass durch die Notwendigkeit, das Tastverhältnis der an das Zündorgan 36 angelegten Spannung übermäßig zu erhöhen, so dass beispielsweise eine vorbestimmte Grenze für dieses Tastverhältnis erreicht wird, was also ein Indiz für eine vergleichsweise geringe Spannung der Spannungsquelle 40 ist, wird erfindungsgemäß durch entsprechende Ansteuerung die Verbrennungsluftzuführanordnung 30 in ihrer Förderleistung gedrosselt. Dies erfolgt im Allgemeinen dadurch, dass die Drehzahl des Förderrads 32 gesenkt wird, so dass auch die im Elektromotor 34 verbrauchte elektrische Energie gemindert werden kann und mithin eine Entlastung der Spannungsquelle 40 auftritt. Gleichzeitig hat die geringere Fördermenge einen geringeren Luftvolumenstrom durch die Brennkammer 16 hindurch zur Folge, so dass der Wärmeabtrag aus der Umgebung des Zündorgans 36 auch entsprechend gemindert werden kann.

Bei dieser in Abhängigkeit vom Tastverhältnis der am Zündorgan 36 anliegenden Spannung vorgenommenen Verringerung der Fördermenge der Verbrennungsluftförderanordnung 30 kann beispielsweise so vorgegangen werden, dass bei Erreichen eines bestimmten Grenz-Tastverhältnisses, bzw. bei Überschreiten dieses Grenz-Tastverhältnisses dann in Zuordnung zu dem tatsächlich eingestellten Tastverhältnis auch eine entsprechende Verringerung der Verbrennungsluftfördermenge, also Verringerung der Drehzahl des Förderrads 32, erzeugt wird. Hier kann beispielsweise ein Kennfeld ausgelesen werden, in welchem ein Zusammenhang zwischen dem Tastverhältnis und der Drehzahl bzw. einer entsprechenden Ansteuermaßnahme im Bereich der Verbrennungsluftzuführanordnung erzeugt wird. Selbstverständlich ist es auch möglich, durch Berechnen einer Aproximationsfunktion eine entsprechende Anpassung vorzunehmen. Diese Anpassung kann stufenartig oder kontinuierlich in Abhängigkeit vom Tastverhältnis erfolgen. Auch ist es möglich, bei Erreichen des Grenz-Tastverhältnisses lediglich eine einzige Veränderung im Bereich der Verbrennungsluftzuführanordnung 30, nämlich durch die Absenkung von deren Förderleistung auf ein bestimmtes Ausmaß vorzunehmen.

Mit dem Verringern der Förderleistung der Verbrennungsluftzuführanordnung 30 und ggf. auch der Brennstoffzuführanordnung 26 kann auch die Heizleistung der Heizeinrichtung 28 verringert werden. Zwar hat dies eine etwas verschlechterte Abdampfcharakteristik des eingespeisten Brennstoffs zur Folge, doch kann auf diese Art und Weise sichergestellt werden, dass die zur Verfügung stehende elektrische Energie primär dort genutzt wird, wo sie auf jeden Fall erforderlich ist, nämlich im Bereich des Zündorgans 36. Hier kann also beispielsweise bei Erreichen der vorbestimmten Grenze des Tastverhältnisses die Heizeinrichtung 28 auch vollständig deaktiviert werden, um in diesem Bereich überhaupt keine elektrische Energie mehr zu verbrauchen und somit die Zündsicherheit zu erhöhen.

Um in dieser Phase, in welcher bei möglicherweise verringerter Heizleistung des Zündorgans 36 ein geringerer Verbrennungsluftstrom in die Brennkammer 16 geleitet wird, gleichwohl ein Gemisch aus Verbrennungsluft und Brennstoffdampf bereitzustellen, das die für die Zündung erforderlich optimale Zusammensetzung aufweist, kann in Anpassung an die Verringerung der Verbrennungsluftzuführmenge auch die Brennstoffzuführmenge durch entsprechende Absenkung der Förderleistung der Brennstoffzuführanordnung 36 gesenkt werden. Auch dies führt gleichzeitig zu einer Entlastung der Spannungsquelle 40. Wird dann über eine bestimmte Zeitdauer, die beispielsweise ab dem Beginn der Startphase oder ab dem Absenken der Förderleistung der Verbrennungsluftzuführanordnung 30 gemessen werden kann, keine Zündung erkannt, beispielsweise vermittels eines im Bereich der Brenneranordnung 12 vorhandenen Flammführers, kann das Gerät abgeschaltet werden, um eine weitere Überlastung der Spannungsquelle 40 zu vermeiden.

Wie vorangehend bereits dargelegt, kann die vorbestimmte Grenze für das Tastverhältnis, deren Überschreiten oder Erreichen Veränderungen in den Ansteuermaßnahmen der Verbrennungsluftzuführanordnug 30, der Brennstoffzuführanordnung 26 und ggf. der Heizeinrichtung 28 auslöst, bei einem Bereich von unter 100%, also beispielsweise etwa 90%, liegen. Dies bedeutet, dass innerhalb eines Tastintervalls 90% der Zeit die Spannung anliegt, und nur 10% der Zeit keine Spannung anliegt. Selbstverständlich ist es auch möglich, als Grenzwert ein Tastverhältnis von 100% anzusetzen. Erst dann, wenn also versucht worden ist, die Spannungsquelle 40 so weit als möglich zu belasten, um die geforderte Heizleistung des Zündorgans 36 bereitzustellen, wird in diesem Falle durch Verringerung der Verbrennungsluftfördermenge dafür gesorgt, dass erstens der Energieabtrag aus dem Bereich des Zündorgans 36 verringert wird und zweitens die Belastung der Spannungsquelle durch den Elektromotor 34 und ggf. auch durch die Brennstoffzuführanordnung 26 und die Heizeinrichtung 28 verringert wird.

Vorangehend wurde die erfindungsgemäße Vorgehensweise beschrieben im Zusammenhang mit einem brennstoffbetriebenen Fahrzeugheizgerät, das zur Erwärmung von in einen Fahrzeuginnenraum einzuleitender Luft oder beispielsweise zur Erwärmung des in einem Kühlmittelkreislauf einer Brennkraftmaschine zirkulierenden Kühlmittels genutzt werden kann. Es ist selbstverständlich, dass im Sinne der vorliegenden Erfindung ein derartiges brennstoffbetriebenes Fahrzeugheizgerät auch aufgebaut sein kann als so genannter Reformer. Ein derartiger Reformer erzeugt Wasserstoff bzw. ein wasserstoffhaltiges Reformat für ein Brennstoffzellensystem. Dieses Reformat kann unter Einsatz von Kohlenwasserstoff, Luft und ggf. auch Wasser im Reformer erzeugt werden, wobei dieser Reformer aufgebaut sein kann wie ein mit Brennstoff zu versorgender Verdampferbrenner und insbesondere in einer Startphase als Brenner betrieben werden kann, um, vor der Reformaterzeugung in einer Verbrennungsphase den eingeleiteten Kohlenwasserstoff mit ebenfalls eingeleiteter Luft zu verbrennen. Die dabei entstehende Wärme wird in den Verbrennungsabgasen durch stromabwärts liegende Komponenten des Brennstoffzellensystems hindurch transportiert und sorgen somit für eine rasche Erwärmung, insbesondere auch des Katalysatormaterials des Reformers selbst bzw. der Brennstoffzelle. In dieser Phase wirkt also der Reformer als Fahrzeugheizgerät zum Erwärmen verschiedener Systembereiche eines Brennstoffzellensystems und kann mit der erfindungsgemäßen Vorgehensweise gestartet werden.

## Patentansprüche

1. Verfahren zum Betreiben eines brennstoffbetriebenen Fahrzeugheizgerätes in einer Startphase, wobei das Fahrzeugheizgerät (10) eine Brenneranordnung (12) mit einer Brennkammer (16) in einem Brennkammergehäuse (14), eine Brennstoffzuführanordnung (26) zum Zuführen von Brennstoff zu der Brennkammer (16), eine Verbrennungsluftzuführanordnug (30) zum Zuführen von Verbrennungsluft zu der Brennkammer (16), ein elektrisch erregbares Zündorgan (36) zum Zünden eines Verbrennungsluft/Brennstoff-Gemisches im Bereich der Brennkammer (16) sowie eine Ansteuervorrichtung (38) zur Ansteuerung der Brennstoffzuführanordnung (26), der Verbrennungsluftzuführanordnung (30) und des Zündorgans (36) umfasst, wobei das Verfahren die folgenden Maßnahmen umfasst:
a) Betreiben der Brennstoffzuführanordnung (26) und der Verbrennungsluftzuführanordnung (30) zum Erzeugen eines Verbrennungsluft/Brennstoff-Gemisches im Bereich der Brennkammer (16),
b) Erregen des Zündorgans (36) durch Anlegen einer getakteten Spannung zum Einstellen einer vorbestimmten Soll-Leistung des Zündorgans (36),
c) dann, wenn das Tastverhältnis der getakteten Spannung für das Zündorgan (36) eine erste vorbestimmte Grenze erreicht, Verringern der Fördermenge der Verbrennungsluftzuführanordnung (30).

2. Verfahren nach Anspruch 1,
**dadurch gekennzeichnet, dass** bei Überschreiten der ersten vorbestimmten Grenze die Fördermenge der Verbrennungsluftzuführanordnung (30) in Abhängigkeit von dem Tastverhältnis der getakteten Spannung für das Zündorgan (36) verringert wird.

3. Verfahren nach Anspruch 1 oder 2,
**dadurch gekennzeichnet, dass** bei Verringerung der Fördermenge der Verbrennungsluftzuführanordnung (30) die Fördermenge der Brennstoffzuführanordnung (26) verringert wird.

4. Verfahren nach einem der Ansprüche 1 bis 3,
**dadurch gekennzeichnet, dass** die erste vorbestimmte Grenze bei einem Tastgrad von 100% liegt.

5. Verfahren nach einem der Ansprüche 1 bis 3,
**dadurch gekennzeichnet, dass** die erste vorbestimmte Grenze bei einem Tastgrad von weniger als 100% liegt.

6. Verfahren nach einem der Ansprüche 1 bis 4,
**dadurch gekennzeichnet, dass** die Brenneranordnung (12) in dem Brennkammergehäuse (14) ein poröses Vedampfermedium (22) zur Aufnahme von flüssigem Brennstoff von der Brennstoffzuführanordnung (26) und diesem zugeordnet eine elektrisch erregbare Heizeinrichtung (28) umfasst, und dass dann, wenn das Tastverhältnis der getakteten Spannung für das Zündorgan (36) eine zweite vorbestimmte Grenze erreicht, die Heizleistung der in der Startphase betriebenen Heizeinrichtung (28) verringert wird.

7. Verfahren nach Anspruch 6,
**dadurch gekennzeichnet, dass** die Heizeinrichtung (28) abgeschaltet wird.

8. Verfahren nach Anspruch 6 oder 7,
**dadurch gekennzeichnet, dass** die erste vorbestimmte Grenze der zweiten vorbestimmten Grenze entspricht.

## Claims

1. Method for operating a fuel operated vehicle heating device during a starting phase, said vehicle heating device (10) comprising a burner arrangement (12) with a combustion chamber (16) in a combustion chamber housing (14), a fuel supply arrangement (26) for supplying fuel to said combustion chamber (16), a combustion air supply arrangement (30) for supplying combustion air to said combustion chamber (16), an electrically excitable ignition member (36) for igniting a combustion air/fuel mixture in the area of the combustion chamber as well as a control unit (38) for controlling said fuel supply arrangement (26), said combustion air supply arrangement (30) and said ignition member (36), said method comprising the following measures:
a) operating said fuel supply arrangement (26) and said combustion air supply arrangement (30) for producing a combustion air/fuel mixture in the area of said combustion chamber (16),
b) exciting said ignition element (36) by applying a pulsed voltage for setting a predefined target performance of said ignition member (36),
c) when the duty cycle of the pulsed tension for said ignition member (36) reaches a first predefined limit reducing the supply volume of said combustion air supply arrangement (30).

2. Method according to claim 1,
**characterized in that**, when said first predefined limit is exceeded, the supply volume of said combustion air supply arrangement (30) is reduced depending on the duty cycle of the pulsed tension for said ignition member (36).

3. Method according to claim 1 or 2,
**characterized in that** when the supply volume for said combustion air supply arrangement (30) is reduced, said supply volume for the fuel supply arrangement (26) is reduced.

4. Method according to one of claims 1 to 3,
**characterized by** the first predefined limit corresponding to a duty cycle of 100%.

5. Method according to one of claims 1 to 3,
**characterized by** the first predefined limit corresponding to a duty cycle of less than 100%.

6. Method according to one of claims 1 to 4,
**characterized by** said burner arrangement (12) in said combustion chamber housing (14) comprising a porous evaporator medium (22) for taking up liquid fuel from said fuel supply arrangement (26) and associated thereto an electrically excitable heating device (28), and **characterized in that**, when said duty cycle of the pulsed tension for said ignition member (36) reaches a second predefined limit, the heating performance of the heating device (28) operated in the starting phase is reduced.

7. Method according to claim 6,
**characterized by** said heating device (28) being switched off.

8. Method according to claims 6 or 7,
**characterized by** said first predefined limit corresponding to said second predefined limit.

## Revendications

1. Un procédé pour opérer un dispositif de chauffage de véhicule alimenté en combustible pendant une phase de démarrage, ledit dispositif de chauffage de véhicule (10) comprenant un arrangement de brûleur (12) avec une chambre de combustion (16) dans un boîtier de chambre de combustion (14), un arrangement d'approvisionnement en combustible (26) pour transporter du combustible à la chambre de combustion (16), un arrangement d'approvisionnement en air de combustion (30) pour transporter de l'air de combustion à la chambre de combustion (16), un élément d'allumage électriquement excitable (36) pour allumer un mélange air de combustion/combustible dans la région de la chambre de combustion (16) ainsi qu'un dispositif de contrôle (38) pour contrôler l'arrangement d'approvisionnement en combustible (26), l'arrangement d'approvisionnement en air de combustion (30) et l'élément d'allumage (36), le procédé comprenant les mesures suivantes:
a) opérer l'arrangement d'approvisionnement en combustible (26) et l'arrangement d'approvisionnement en air de combustion (30) pour créer un mélange air de combustion/combustible dans la région de la chambre de combustion (16),
b) exciter l'élément d'allumage (36) en appliquant une tension pulsée pour régler une performance cible prédéfinie de l'élément d'allumage (36),
c) quand le cycle de travail de la tension pulsée atteint une première limite prédéfinie, réduire le débit de l'arrangement d'approvisionnement en air de combustion (30).

2. Procédé selon la revendication 1,
**caractérisé par** le débit de l'arrangement d'approvisionnement en air de combustion (30) étant réduit en fonction du cycle de travail de la tension pulsée pour l'élément d'allumage (36), lorsque la première limite prédéfinie est dépassée.

3. Procédé selon la revendication 1 ou 2,
**caractérisé par** le débit de l'arrangement d'approvisionnement en combustible (26) étant réduit lors d'une réduction du débit de l'arrangement d'approvisionnement en air de combustion (30).

4. Procédé selon une des revendications 1 à 3,
**caractérisé par** la première limite prédéfinie correspondant à un cycle de travail de 100%.

5. Procédé selon une des revendications 1 à 3,
**caractérisé par** la première limite prédéfinie correspondant à un cycle de travail de moins de 100%.

6. Procédé selon une des revendications 1 à 4,
**caractérisé par** l'arrangement de brûleur (12) dans la chambre de combustion (14) comprenant un médium d'évaporation poreux (22) pour recevoir du combustible liquide de l'arrangement d'approvisionnement en combustible (26) et, associé à ce dernier, un dispositif de chauffage électriquement excitable (28) ; et par la puissance de chauffage du dispositif de chauffage (28) opéré dans une phase de démarrage étant réduit lorsque le cycle de travail de la tension pulsée pour l'élément d'allumage (36) atteint une deuxième limite prédéfinie.

7. Procédé selon la revendication 6,
**caractérisé par** le dispositif de chauffage (28) étant éteint.

8. Procédé selon la revendication 7,
**caractérisé par** la première limite prédéfinie correspondant à la deuxième limite prédéfinie.
